# FASCICULE DE BREVET EUROPEEN

(11) **EP 1 794 544 B1**
(45) Date de publication et mention de la délivrance du brevet: **20.03.2013**
(21) Numéro de dépôt: 05805785.2
(22) Date de dépôt: 19.09.2005
(51) Int. Cl.: G01C 21/16

(54) **Procédé et dispositif de mesure de l'orientation du train d'atterrissage avant d'un avion**
VERFAHREN UND VORRICHTUNG ZUR MESSUNG DER AUSRICHTUNG EINES FLUGZEUGBUGFAHRWERKS
METHOD AND DEVICE FOR MEASURING THE ORIENTATION OF AN AIRCRAFT NOSE LANDING GEAR

(30) Priorité: 28.09.2004 FR 0410236
(43) Date de publication de la demande: 13.06.2007
(73) Titulaire: AIRBUS OPERATIONS (SAS), 31060 Toulouse (FR)
(72) Inventeur: FURGAL, Bernard, F-31180 Saint Genies Bellevue (FR)
(74) Mandataire: Hauer, Bernard
(86) Numéro de dépôt international: PCT/FR2005/002307
(87) Numéro de publication internationale: WO 2006/035132

(56) Documents cités:
- EP-A- 0 617 259
- EP-A- 0 836 990

## Description

La présente invention concerne un procédé et un dispositif de mesure de l'orientation du train d'atterrissage avant d'un avion, en particulier d'un avion de transport.

On sait que lors du roulage sur le sol, par exemple sur une voie d'accès ou une piste d'atterrissage d'un aéroport, la conduite d'un avion est effectuée par l'intermédiaire du braquage du train d'atterrissage avant. Pour qu'un pilote puisse réaliser dans les meilleures conditions possibles une telle conduite sur le sol, il est bien entendu nécessaire qu'en position non braquée, le train d'atterrissage avant soit parallèle au fuselage de l'avion de sorte qu'une commande de braquage vers la droite (ou vers la gauche) provoque un braquage proportionnel des roues vers la droite (ou vers la gauche) et qu'à défaut de braquage, l'avion roule tout droit.

L'orientation du train d'atterrissage avant est généralement réglée au stade de fabrication dudit train. Toutefois, malgré l'existence d'un tel réglage initial, il peut arriver qu'ultérieurement les roues du train d'atterrissage avant ne soient plus orientées tout à fait parallèlement au fuselage de sorte que le pilote doit alors compenser une dérive de l'avion vers un côté lorsqu'il veut rouler tout droit, par exemple au centre d'une piste d'atterrissage. Un tel déréglage doit bien entendu être corrigé, notamment pour des raisons de confort du roulage au sol, ainsi que pour des raisons de sécurité.

Toutefois, pour pouvoir corriger un tel déréglage, il est nécessaire de connaître l'orientation exacte dudit train d'atterrissage avant par rapport à l'axe longitudinal de l'avion.

Le document EP 0 617 259 A décrit une méthode de calibration du système de navigation d'un avion partant du constat qu'au roulage les roues de l'avion ne sont pas toujours orientées exactement dans la direction d'avancement de l'avion créant ainsi une avance en crabe et que la référence inertielle de l'avion est généralement située en avant du train principal et, par suite, réalisant la calibration en déterminant l'angle de crabe par le calcul des vitesses nord et est.

On dispose actuellement d'un outil de mesure laser, comprenant notamment un adaptateur devant être fixé sur les roues du train d'atterris-sage, un pointeur laser associé, une unité centrale et des cibles. Cet outil de mesure, bien que précis et globalement satisfaisant, présente quelques inconvénients :
- il nécessite un environnement dégagé autour de l'avion ;
- sa mise en oeuvre est relativement longue ;
- sa masse globale est très élevée ;
- son volume est important : et
- il doit être utilisé à l'intérieur (dans un hall), les mesures réalisées pouvant être perturbées par la pluie et/ou le vent.

La présente invention a pour objet de remédier à ces inconvénients. Elle concerne un procédé efficace, peu coûteux et facile à mettre en oeuvre, pour mesurer l'orientation du train d'atterrissage avant d'un avion qui est muni d'une centrale de référence inertielle comportant au moins une première unité de référence inertielle.

A cet effet, selon l'invention, ledit procédé est remarquable en ce que :
a) on monte une seconde unité de référence inertielle sur l'une des roues dudit train d'atterrissage avant ;
b) à l'aide de ladite seconde unité de référence inertielle, on mesure le cap dudit train d'atterrissage avant, en l'absence de braquage de ce dernier ;
c) à l'aide au moins de ladite première unité de référence inertielle de ladite centrale de référence inertielle, on mesure le cap de l'avion ; et
d) on compare ledit cap mesuré du train d'atterrissage avant audit cap mesuré de l'avion de manière à en déduire l'orientation dudit train d'atterrissage avant par rapport au fuselage de l'avion.

Ainsi, grâce à la prise en compte des deux caps, les mesures de l'orientation sont très précises.

De plus, la mise en oeuvre dudit procédé est simple et rapide, notamment par rapport à l'outil de mesure laser précité, puisque uniquement la seconde unité de référence inertielle doit être manipulée et montée sur une roue. En outre, la masse et le volume sont réduits.

Dans un mode de réalisation préféré, ladite seconde unité de référence inertielle fait partie de ladite centrale de référence inertielle (qui existe déjà sur l'avion), et à l'étape a), on dépose ladite seconde unité de référence inertielle de l'avion, avant de la monter sur ladite roue. Ainsi, aucun dispositif extérieur à l'avion n'est nécessaire pour réaliser la mesure de l'orientation du train d'atterrissage avant.

De préférence, à l'étape a), on monte ladite seconde unité de référence inertielle sur une plaque qui est fixée sur la jante de ladite roue et, plus précisément, sur des parties de vis de ladite jante qui dépassent d'écrous coopérants. Ainsi, l'installation de ladite seconde unité de référence inertielle peut être réalisée facilement, rapidement et de façon précise.

Avantageusement, ladite centrale de référence inertielle comporte de plus une troisième unité de référence inertielle et on détermine le cap de l'avion, à l'aide des mesures réalisées par lesdites première et troisième unités de référence inertielles, ce qui permet d'affiner les mesures de cap.

Lorsque l'on désire (en plus de la mesure) également régler l'orientation dudit train d'atterrissage avant, avantageusement, dès que la différence entre ledit cap mesuré du train d'atterrissage avant et ledit cap mesuré de l'avion est supérieure à une première valeur prédéterminée, on modifie l'orientation dudit train d'atterrissage avant de manière à obtenir une différence qui devienne inférieure à une seconde valeur prédéterminée (qui est bien entendu inférieure à ladite première valeur prédéterminée).

La présente invention concerne également un dispositif de mesure de l'orientation du train d'atterrissage avant d'un avion qui est muni d'une centrale de référence inertielle comportant au moins une première unité de référence inertielle.

Selon l'invention, ledit dispositif est remarquable en ce qu'il comporte :
- ladite centrale de référence inertielle qui est susceptible de mesurer le cap de l'avion ;
- une seconde unité de référence inertielle qui est susceptible d'être montée, par l'intermédiaire d'un système de fixation, sur une roue du train d'atterrissage avant et qui est alors susceptible de mesurer le cap dudit train d'atterrissage avant dans une position correspondant à une absence de braquage ; et
- une unité de traitement d'informations comportant des moyens permettant de réaliser la comparaison entre ledit cap mesuré du train d'atterrissage avant et ledit cap mesuré de l'avion de manière à pouvoir en déduire l'orientation dudit train d'atterrissage avant par rapport au fuselage de l'avion.

De préférence, ledit système de fixation comporte une plaque :
- qui est munie d'un support fixe susceptible de recevoir ladite seconde unité de référence inertielle ; et
- qui est susceptible d'être montée sur la jante de ladite roue.

Dans un mode de réalisation particulier, ledit système de fixation est muni de plus :
- d'un capot de protection, ce qui permet de protéger ladite seconde unité de référence inertielle notamment contre la pluie ; et/ou
- d'un ventilateur. Ainsi, le dispositif conforme à l'invention peut être utilisé sans problème par temps très chaud.

Dans un mode de réalisation préféré, ladite seconde unité de référence inertielle fait partie de ladite centrale de référence inertielle de l'avion et est susceptible d'être déposée dudit avion, ce qui permet de réduire le coût du dispositif conforme à l'invention qui comprend uniquement des éléments de mesure qui existent déjà sur l'avion.

De plus, avantageusement, ladite seconde unité de référence inertielle est susceptible d'être alimentée électriquement (de façon usuelle) par un moyen d'alimentation électrique de l'avion. Ainsi, le dispositif conforme à l'invention présente une grande autonomie.

En outre, de facon avantageuse, la centrale de référence inertielle, par exemple de type ADIRS ("Air Data Inertial Reference System"), comporte de plus une troisième unité de référence inertielle, et ladite centrale de référence inertielle détermine le cap de l'avion, à l'aide des mesures réalisées par lesdites première et troisième unités de référence inertielles. Avantageusement, au moins l'une desdites première, deuxième et troisième unités de référence inertielles est du type ADIRU ("Air Data Inertial Reference Unit") et comporte un gyrolaser qui utilise l'accélération de la terre pour déterminer le cap.

Par ailleurs, dans un mode de réalisation particulier :
- ladite seconde unité de référence inertielle est susceptible d'être liée à ladite unité de traitement d'informations de manière à pouvoir transmettre des informations à cette dernière qui comporte au moins un écran d'affichage de mesures ; et/ou
- le dispositif conforme à l'invention comporte, de plus, un lecteur amovible qui est susceptible d'être lié à ladite seconde unité de référence inertielle de manière à pouvoir lire le cap mesuré par cette dernière et à l'afficher sur un écran d'affichage intégré.

Les figures du dessin annexé feront bien comprendre comment l'invention peut être réalisée. Sur ces figures, des références identiques désignent des éléments semblables.
La figure 1 est le schéma synoptique d'un dispositif de mesure conforme à l'invention.
La figure 2 montre schématiquement et partiellement l'avant d'un avion, avec un train d'atterrissage avant sorti.
La figure 3 montre schématiquement un avion en vue en plan, sur lequel on a représenté les différents caps mesurés par le dispositif de mesure conforme à l'invention.
La figure 4 montre une plaque de support qui est montée sur une roue d'un train d'atterrissage avant.
La figure 5 montre une unité de référence inertielle qui est portée par la plaque de support représentée sur la figure 4.
La figure 6 est une figure similaire à celle de la figure 5, montrant schématiquement des caractéristiques supplémentaires de la présente invention.

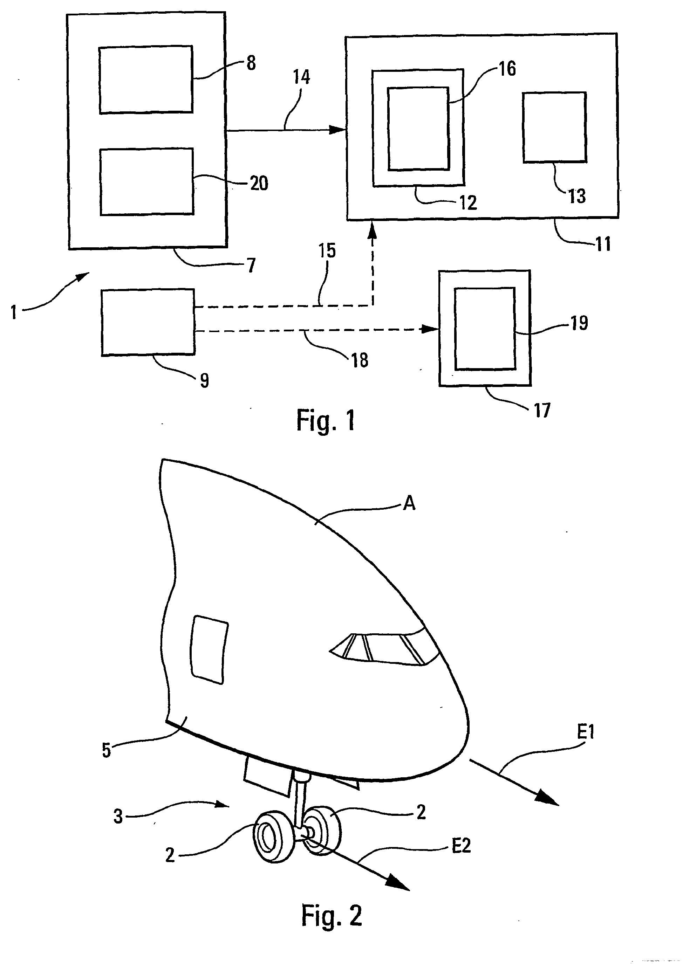

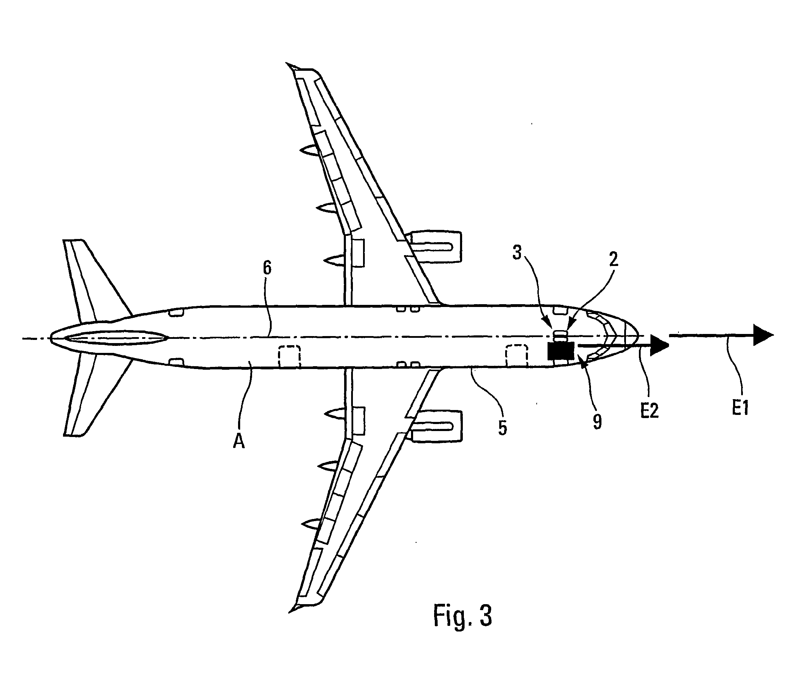

Le dispositif 1 conforme à l'invention et représenté schématiquement sur la figure 1 est destiné à mesurer (et éventuellement à corriger ou régler) l'orientation des roues 2 du train d'atterrissage avant 3 d'un avion A, en particulier d'un avion de transport, orientation qui est définie par rapport au fuselage 5 dudit avion A, et plus précisément par rapport à l'axe longitudinal 6 dudit avion A qui est représenté sur les figures 2 et 3.

On sait que lors du roulage sur le sol, par exemple sur une voie d'accès ou une piste d'atterrissage d'un aéroport (en vue du décollage ou de l'atterrissage), la conduite d'un avion A est commandée par un pilote qui manipule à cet effet un moyen d'actionnement approprié usuel (non représenté), par exemple un volant, destiné à commander le braquage du train d'atterrissage avant 3. L'angle de braquage est l'angle que font les roues directrices 2 avec le plan longitudinal de l'avion A, lors du braquage commandé par le pilote. Pour des raisons de sécurité, ainsi que pour des raisons de confort du roulage au sol, il est nécessaire qu'en position non braquée (le moyen d'actionnement précité se trouve alors en position centrale neutre), le train d'atterrissage avant 3 soit parallèle au fuselage 5 de l'avion A de sorte que :
- lorsque le pilote réalise une commande de braquage vers la droite (respectivement vers la gauche), il provoque un braquage proportionnel des roues 2 vers la droite (respectivement vers la gauche) ; et
- à défaut de braquage (position neutre précitée), l'avion A roule tout droit, suivant son axe longitudinal 6.

Bien entendu, pour pouvoir corriger un éventuel déréglage (défaut de parallélisme en position neutre des roues directrices 2 par rapport à l'axe longitudinal 6), il est nécessaire de connaître la valeur de ce déréglage, c'est-à-dire la valeur exacte de l'orientation dudit train d'atterrissage avant 3 par rapport à l'axe longitudinal 6 de l'avion A.

Le dispositif 1 conforme à l'invention a pour objet de mesurer une telle orientation. Ce dispositif 1 s'applique à un avion A qui est muni d'une centrale de référence inertielle 7, par exemple de type ADIRS ("Air Data Inertial Reference System"), c'est-à-dire une centrale de référence inertielle intégrant les fonctions d'une centrale anémobarométrique, et comportant au moins une première unité de référence inertielle 8, de préférence de type ADIRU ("Air Data Inertial Reference Unit").

Selon l'invention, ledit dispositif 1 comporte, comme représenté sur la figure 1 :
- ladite centrale de référence inertielle 7 qui est susceptible de mesurer le cap C1 de l'avion A, c'est-à-dire le cap C1 suivant l'axe longitudinal 6 dudit avion A, comme représenté par une flèche E1 sur les figures 2 et 3;
- une seconde unité de référence inertielle 9 qui est susceptible d'être montée, par l'intermédiaire d'un système de fixation 10, sur une roue 2 du train d'atterrissage avant 3, comme précisé ci-dessous, et qui est alors susceptible de mesurer le cap C2 dudit train d'atterrissage avant 3 dans une position (neutre) correspondant à une absence de braquage des roues 2, comme représenté par une flèche E2 sur les figures 2 et 3 ; et
- une unité de traitement d'informations 11 comportant des moyens 12, 13 permettant de réaliser la comparaison entre ledit cap mesuré C2 du train d'atterrissage avant 3 et ledit cap mesuré C1 de l'avion A de manière à pouvoir en déduire l'orientation angulaire exacte dudit train d'atterrissage avant 3 par rapport au fuselage 5 de l'avion A.

Ladite unité de traitement d'informations 11 qui est embarquée sur l'avion A, est reliée par une liaison fixe 14 à ladite centrale de référence inertielle 7 et peut être reliée par une liaison amovible 1 5 (représentée en traits interrompus) à ladite unité de référence inertielle 9.

De plus, ladite unité de traitement d'informations 11 comporte un moyen d'affichage 12 qui est susceptible d'afficher sur un écran de visualisation 16 :
- dans une première variante, les valeurs de cap C1 et C2 mesurées respectivement par ladite centrale de référence inertielle 7 et ladite unité de référence inertielle 9. Un opérateur qui a ainsi connaissance desdites valeurs de cap C1 et C2 peut alors réaliser personnellement la comparaison précitée entre ces deux valeurs ;
- dans une deuxième variante, la différence (ou l'écart) entre ces valeurs de cap C1 et C2, c'est-à-dire le résultat de la comparaison précitée ; et
- dans une troisième variante, à la fois lesdites valeurs de cap C1 et C2 et ladite différence.

Pour mettre en oeuvre ces deux dernières variantes, ladite unité de traitement d'informations 11 peut comporter un moyen de comparaison 13 qui calcule automatiquement ladite différence entre les valeurs C1 et C2.

Dans un mode de réalisation particulier, le dispositif 1 conforme à l'invention comporte, de plus, un lecteur amovible 17 qui est susceptible d'être lié par une liaison 18 (représentée en traits interrompus) à ladite unité de référence inertielle 9 de manière à pouvoir lire le cap mesuré par cette dernière et à l'afficher sur un écran d'affichage 19 intégré. Ceci permet à un opérateur de lire la valeur à proximité immédiate de la roue 2 de l'avion A sur laquelle est montée ladite unité de référence inertielle 9. sans avoir à accéder au poste de pilotage où est généralement situé l'écran de visualisation 16.

Dans un mode de réalisation particulier, la centrale de référence inertielle 7 comporte de plus une autre unité de référence inertielle 20, et ladite centrale de référence inertielle 7 détermine le cap C1 de l'avion A, à l'aide des mesures réalisées par lesdites deux unités de référence inertielles 8 et 20.

De préférence, au moins l'une desdites unités de référence inertielles 8, 9 et 20 comporte un gyrolaser usuel, qui est un appareil de mesure de la vitesse angulaire, dont le principe est fondé sur la propagation de la lumière cohérente. On sait qu'un tel gyrolaser utilise l'accélération de la terre pour déterminer le cap.

En outre, dans un mode de réalisation préféré, ladite unité de référence inertielle 9 fait partie de ladite centrale de référence inertielle 7 de l'avion A, et elle est susceptible d'être déposée dudit avion A (où elle est initialement installée) pour être montée sur la roue 2 en vue de la mesure du cap C2 (avant d'être remontée sur l'avion A à la fin des mesures), ce qui permet de réduire le coût dudit dispositif 1 conforme à l'invention qui comprend ainsi uniquement des éléments de mesure qui existent déjà sur l'avion A. Il en est de même de l'unité de traitement d'informations 11. Par conséquent, seul le lecteur 17 (qui de plus n'est pas indispensable à la mise en oeuvre de la présente invention) ne fait pas partie de l'avion A.

De plus, lorsqu'elle est montée sur la roue 2, ladite unité de référence inertielle 9 est susceptible d'être alimentée électriquement (de façon usuelle) par un moyen d'alimentation électrique usuelle (non représenté) de l'avion A. Ainsi, le dispositif 1 conforme à l'invention présente une grande autonomie, car il ne nécessite pas d'alimentation extérieure à l'avion A, ni de batterie à charger.

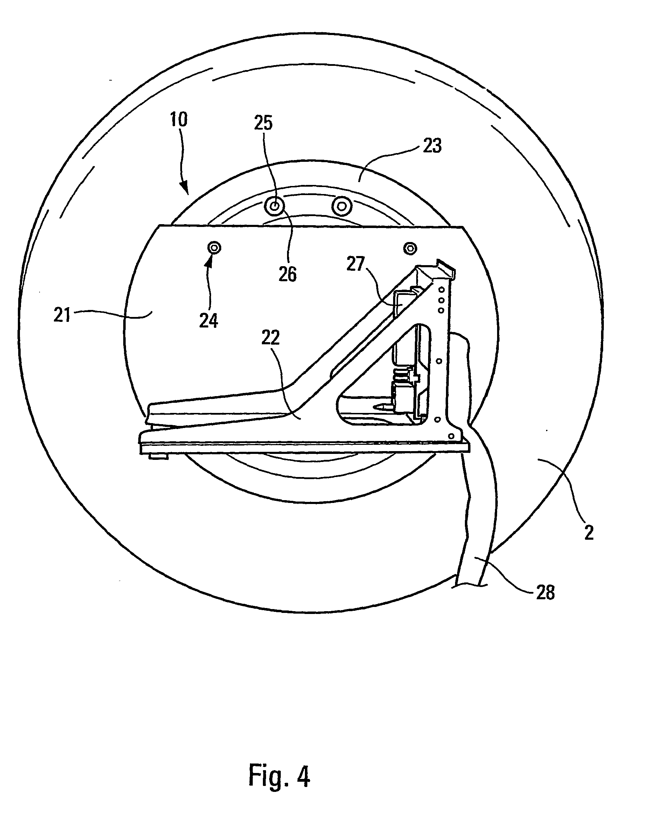

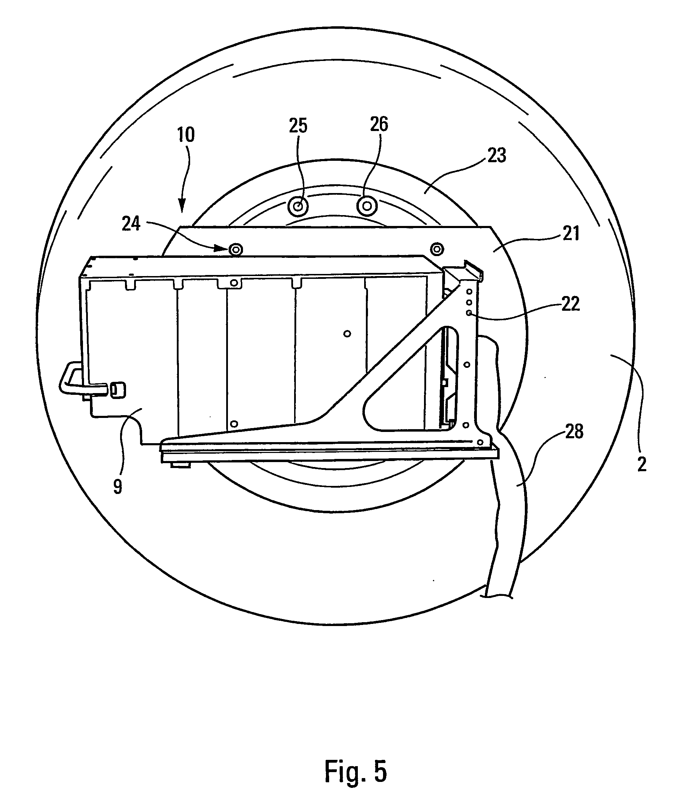

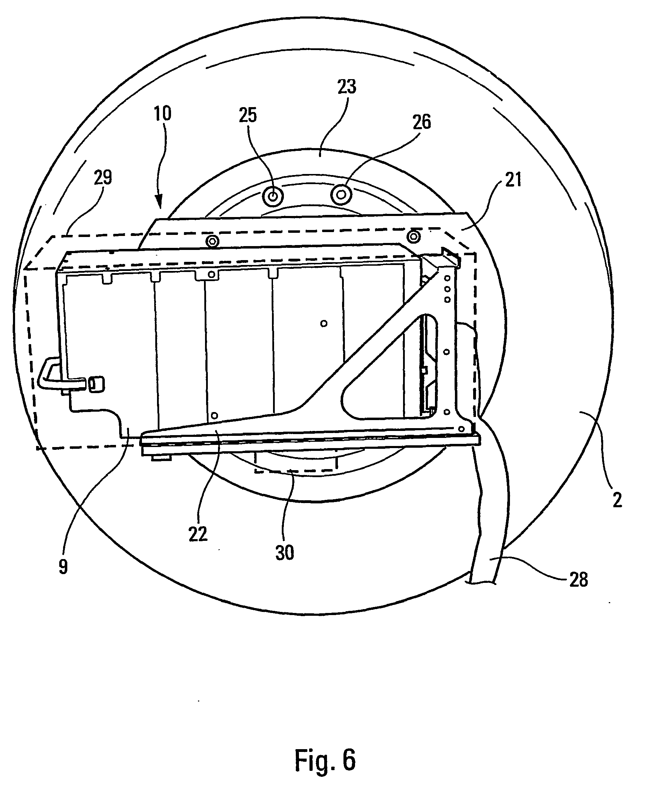

Par ailleurs, dans un mode de réalisation particulier représenté sur les figures 4, 5 et 6, ledit système de fixation 10 comporte une plaque 21, en bois ou en métal par exemple :
- qui est munie d'un support fixe 22 susceptible de recevoir ladite unité de référence inertielle 9, comme représenté sur les figures 5 et 6 ; et
- qui est susceptible d'être montée sur la jante 23 de ladite roue 2, de préférence la roue droite du train d'atterrissage avant 3, parallèlement à ladite jante 23.

A cet effet, ladite plaque 21 est fixée sur la jante 23 de ladite roue 2 à l'aide d'écrous 24 qui coopèrent avec des parties de vis 25 de ladite jante 23 qui dépassent des écrous coopérants 26, comme représenté pour des boulons non utilisés sur les figures 4 à 6. Ainsi, l'installation de ladite plaque 21 et donc de ladite unité de référence inertielle 9 peut être réalisée facilement, rapidement et de façon précise.

Ledit système de fixation 10 comporte, de plus, un connecteur usuel 27 qui est destiné à coopérer avec un connecteur coopérant (non représenté) de l'unité de référence inertielle 9, lorsque cette dernière est montée sur le support 22 (figures 5 et 6). Le connecteur 27 est fixé au support 22 et est relié à un câble ou faisceau 28 comprenant au moins l'une des liaisons 15 et 18 précitées de transmission de données.

Dans un mode de réalisation particulier représenté très schématiquement sur la figure 6, ledit système de fixation 10 est muni de plus :
- d'un capot de protection 29, ce qui permet de protéger ladite unité de référence inertielle 9 notamment contre la pluie ; et/ou
- d'un ventilateur usuel 30. Ainsi, le dispositif 1 conforme à l'invention peut être utilisé sans problème par temps très chaud.

Ledit dispositif 1 présente donc de très nombreux avantages. En particulier :
- ses mesures sont très précises ;
- sa mise en place est simplifiée, fiable et précise, notamment par rapport à celle d'un outil de mesure laser usuel de type précité. Aussi, il devient facilement possible de réaliser un contrôle systématique de l'orientation du train d'atterrissage avant 3 (même sur la chaîne d'assemblage) de sorte que chaque avion A sortant des chaînes -d'assemblage se trouve dans les tolérances des compagnies aériennes pour ce qui est de l'orientation du train d'atterrissage avant 3 ;
- son coût est réduit ;
- il présente une grande autonomie ;
- ses mesures ne sont pas perturbées par de mauvaises conditions météorologiques (pluie, chaleur, vent, ...) ; et
- il peut être utilisé sur tout type d'avion A comprenant une centrale de référence inertielle 7 susceptible de mesurer le cap C1 de l'avion A.

Dans le cadre de la présente invention, lorsque l'on désire (en plus de faire des mesures) également corriger l'orientation dudit train d'atterrissage avant 3, dès que la différence (en valeur angulaire) entre ledit cap mesuré C2 du train d'atterrissage avant 3 et ledit cap mesuré C1 de l'avion A est supérieure à une première valeur angulaire prédéterminée, par exemple 3°, on corrige l'orientation dudit train d'atterrissage avant 3 de manière à obtenir une différence (ou écart) de cap qui devient inférieure à une seconde valeur angulaire prédéterminée, par exemple 0,1°.

Dans un mode de réalisation préféré, pour lequel l'unité de référence inertielle 9 fait partie de la centrale de référence inertielle 7 de l'avion A, on met en oeuvre les étapes successives suivantes lors de la mesure et du réglage (ou correction) de l'orientation dudit train d'atterrissage avant 3 :
- en préparation :
   • on dépose l'unité de référence inertielle 9 de l'avion A ;
   • on installe le système de fixation 10 sur la roue 2, et on connecte le câble 28 à l'unité de traitement d'informations 11 ;
   • on installe l'unité de référence inertielle 9 sur ledit système de fixation 10 ;
- lors d'une mesure et d'un réglage suivants :
   • on alimente l'avion A, électriquement et hydrauliquement ;
   • on procède à la mise sous tension de la centrale de référence inertielle 7 et de l'unité de référence inertielle 9 ;
   • on mesure le cap C1 de l'avion A, à l'aide de la centrale de référence inertielle 7 ;
   • on mesure le cap C2 du train d'atterrissage avant 3, à l'aide de l'unité de référence inertielle 9 ;
   • on compare lesdits caps C1 et C2 ;
   • en fonction de cette comparaison, on règle de façon usuelle l'orientation des roues 2 si nécessaire ;
   • éventuellement, on refait des mesures de cap et une comparaison pour vérifier que le réglage a été bien réalisé ;
- lors d'une remise en état finale :
   • on dépose l'unité de référence inertielle 9 et on la réinstalle sur l'avion A à sa place habituelle ;
   • on dépose le système de fixation 10.

## Revendications

1. Procédé de mesure de l'orientation du train d'atterrissage avant (3) d'un avion (A) qui est muni d'une centrale de référence inertielle (7) comportant au moins une première unité de référence inertielle (8), **caractérisé en ce que** :
a) on monte une seconde unité de référence inertielle (9) sur l'une (2) des roues dudit train d'atterrissage avant (3) ;
b) à l'aide de ladite seconde unité de référence inertielle (9), on mesure le cap dudit train d'atterrissage avant (3), en l'absence de braquage de ce dernier ;
c) à l'aide au moins de ladite première unité de référence inertielle (8) de ladite centrale de référence inertielle (7), on mesure le cap de l'avion (A) ; et
d) on compare ledit cap mesuré du train d'atterrissage avant (3) audit cap mesuré de l'avion (A) de manière à en déduire l'orientation dudit train d'atterrissage avant (3) par rapport au fuselage (5) de l'avion (A).

2. Procédé selon la revendication 1,
**caractérisé en ce que** ladite seconde unité de référence inertielle (9) fait partie de ladite centrale de référence inertielle (7), et **en ce qu'**à l'étape a), on dépose ladite seconde unité de référence inertielle (9) de l'avion (A), avant de la monter sur ladite roue (2).

3. Procédé selon l'une des revendications 1 et 2,
**caractérisé en ce qu'**à l'étape a), on monte ladite seconde unité de référence inertielle (9) sur une plaque (21) qui est fixée sur la jante (23) de ladite roue (2).

4. Procédé selon la revendication 3,
**caractérisé en ce que** l'on fixe ladite plaque (21) sur des parties de vis (25) de ladite jante qui dépassent d'écrous coopérants (26).

5. Procédé selon l'une quelconque des revendications précédentes,
**caractérisé en ce que** ladite centrale de référence inertielle (7) comporte de plus une troisième unité de référence inertielle (20), et **en ce que** l'on détermine le cap de l'avion (A), à l'aide des mesures réalisées par lesdites première et troisième unités de référence inertielles (8, 20).

6. Procédé selon l'une quelconque des revendications précédentes, pour de plus régler l'orientation du train d'atterrissage avant (3), **caractérisé en ce que**, lorsque la différence entre ledit cap mesuré du train d'atterrissage avant (3) et ledit cap mesuré de l'avion (A) est supérieure à une première valeur prédéterminée, on modifie l'orientation dudit train d'atterrissage avant (3) de manière à obtenir une différence qui devienne inférieure à une seconde valeur prédéterminée.

7. Dispositif de mesure de l'orientation du train d'atterrissage avant (3) d'un avion (A) qui est muni d'une centrale de référence inertielle (7) comportant au moins une première unité de référence inertielle (8), **caractérisé en ce qu'**il comporte :
- ladite centrale de référence inertielle (7) qui est susceptible de mesurer le cap de l'avion (A) ;
- une seconde unité de référence inertielle (9) qui est susceptible d'être montée, par l'intermédiaire d'un système de fixation (10), sur une roue (2) du train d'atterrissage avant (3) et qui est alors susceptible de mesurer le cap dudit train d'atterrissage avant (3) dans une position correspondant à une absence de braquage ; et
- une unité de traitement d'informations (11) comportant des moyens (12, 13) permettant de réaliser la comparaison entre ledit cap mesuré du train d'atterrissage avant (3) et ledit cap mesuré de l'avion (A) de manière à pouvoir en déduire l'orientation dudit train d'atterrissage avant (3) par rapport au fuselage (6) de l'avion (A).

8. Dispositif selon la revendication 7,
**caractérisé en ce que** ledit système de fixation (10) comporte une plaque (21) :
- qui est munie d'un support fixe (22) susceptible de recevoir ladite seconde unité de référence inertielle (9) ; et
- qui est susceptible d'être montée sur la jante (23) de ladite roue (2).

9. Dispositif selon l'une des revendications 7 et 8,
**caractérisé en ce que** ledit système de fixation (10) est muni d'un capot de protection (29).

10. Dispositif selon l'une des revendications 7 à 9,
**caractérisé en ce que** ledit système de fixation (10) est muni d'un ventilateur (30).

11. Dispositif selon l'une des revendications 7 à 10,
**caractérisé en ce que** ladite seconde unité de référence inertielle (9) fait partie de ladite centrale de référence inertielle (7) de l'avion (A) et est susceptible d'être déposée dudit avion (A).

12. Dispositif selon l'une quelconque des revendications 7 à 11,
**caractérisé en ce que** ladite seconde unité de référence inertielle (9) est susceptible d'être alimentée électriquement par un moyen d'alimentation électrique de l'avion (A).

13. Dispositif selon l'une quelconque des revendications 7 à 12,
**caractérisé en ce que** ladite centrale de référence inertielle (7) comporte de plus une troisième unité de référence inertielle (20), et **en ce que** ladite centrale de référence inertielle (7) détermine le cap de l'avion (A), à l'aide des mesures réalisées par lesdites première et troisième unités de référence inertielles (8, 20).

14. Dispositif selon l'une quelconque des revendications 7 à 13,
**caractérisé en ce que** ladite seconde unité de référence inertielle (9) est susceptible d'être liée à ladite unité de traitement d'informations (11) de manière à pouvoir transmettre des informations à cette dernière qui comporte au moins un écran (16) d'affichage de mesures.

15. Dispositif selon l'une quelconque des revendications 7 à 14,
**caractérisé en ce qu'**il comporte, de plus, un lecteur amovible (17) qui est susceptible d'être lié à ladite seconde unité de référence inertielle (9) de manière à pouvoir lire le cap mesuré par cette dernière et à l'afficher sur un écran d'affichage (19) intégré.

16. Dispositif selon l'une quelconque des revendications 7 à 15,
**caractérisé en ce qu'**au moins l'une desdites unités de référence inertielles (8, 9, 20) comporte un gyrolaser qui utilise l'accélération de la terre pour mesurer le cap.

17. Avion,
**caractérisé en ce qu'**il comporte un dispositif (1) arrangé pour mettre en oeuvre le procédé spécifié sous l'une quelconque des revendications 1 à 6.

18. Avion,
**caractérisé en ce qu'**il comporte un dispositif (1) tel que celui spécifié sous l'une quelconque des revendications 7 à 16.

## Claims

1. A method for measuring the orientation of the nose landing gear (3) of an aircraft (A) which is furnished with an inertial reference rig (7) comprising at least a first inertial reference unit (8),
**characterized in that**
a) a second inertial reference unit (9) is mounted on one (2) of the wheels of said nose landing gear (3);
b) with the aid of said second inertial reference unit (9), the heading of said nose landing gear (3) is measured in the absence of deflection of the latter;
c) with the aid of at least said first inertial reference unit (8) of said inertial reference rig (7), the heading of the aircraft (A) is measured; and
d) said measured heading of the nose landing gear (3) is compared with said measured heading of the aircraft (A) in such a way as to deduce therefrom the orientation of said nose landing gear (3) with respect to the fuselage (5) of the aircraft (A).

2. The method as claimed in claim 1,
**characterized in that** said second inertial reference unit (9) forms part of said inertial reference rig (7) and **in that**, in step a), said second inertial reference unit (9) is dismantled from the aircraft (A), before being mounted on said wheel (2).

3. The method as claimed in one of claims 1 and 2,
**characterized in that**, in step a), said second inertial reference unit (9) is mounted on a plate (21) which is fixed on the rim (23) of said wheel (2).

4. The method as claimed in claim 3,
**characterized in that** said plate (21) is fixed on parts of screws (25) of said rim which overhang cooperating nuts (26).

5. The method as claimed in one of the preceding claims,
**characterized in that** said inertial reference rig (7) moreover comprises a third inertial reference unit (20), and **in that** the heading of the aircraft (A) is determined with the aid of the measurements carried out by said first and third inertial reference units (8, 20).

6. The method as claimed in any one of the preceding claims, for moreover adjusting the orientation of the nose landing gear (3),
**characterized in that**, when the difference between said measured heading of the nose landing gear (3) and said measured heading of the aircraft (A) is greater than a first predetermined value, the orientation of said nose landing gear (3) is modified in such a way as to obtain a difference which becomes less than a second predetermined value.

7. A device for measuring the orientation of the nose landing gear (3) of an aircraft (A) which is furnished with an inertial reference rig (7) comprising at least a first inertial reference unit (8),
**characterized in that** it comprises:
- said inertial reference rig (7) which is capable of measuring the heading of the aircraft (A);
- a second inertial reference unit (9) which is capable of being mounted, by way of a fixing system (10), on a wheel (2) of the nose landing gear (3) and which is then capable of measuring the heading of said nose landing gear (3) in a position corresponding to an absence of deflection; and
- an information processing unit (11) comprising means (12, 13) making it possible to carry out the comparison between said measured heading of the nose landing gear (3) and said measured heading of the aircraft (A) in such a way as to be able to deduce therefrom the orientation of said nose landing gear (3) with respect to the fuselage (6) of the aircraft (A).

8. The device as claimed in claim 7,
**characterized in that** said fixing system (10) comprises a plate (21):
- which is furnished with a fixed support (22) capable of receiving said second inertial reference unit (9); and
- which is capable of being mounted on the rim (23) of said wheel (2).

9. The device as claimed in one of claims 7 and 8,
**characterized in that** said fixing system (10) is furnished with a protective hood (29).

10. The device as claimed in one of claims 7 to 9,
**characterized in that** said fixing system (10) is furnished with a fan (30).

11. The device as claimed in one of claims 7 to 10,
**characterized in that** said second inertial reference unit (9) forms part of said inertial reference rig (7) of the aircraft (A) and is capable of being dismantled from said aircraft (A).

12. The device as claimed in any one of claims 7 to 11,
**characterized in that** said second inertial reference unit (9) is capable of being supplied electrically by a means of electrical supply of the aircraft (A).

13. The device as claimed in any one of claims 7 to 12,
**characterized in that** said inertial reference rig (7) moreover comprises a third inertial reference unit (20), and **in that** said inertial reference rig (7) determines the heading of the aircraft (A), with the aid of the measurements carried out by said first and third inertial reference units (8, 20).

14. The device as claimed in any one of claims 7 to 13,
**characterized in that** said second inertial reference unit (9) is capable of being linked to said information processing unit (11) in such a way as to be able to transmit information to the latter which comprises at least a screen (16) for displaying measurements.

15. The device as claimed in any one of claims 7 to 14,
**characterized in that** it moreover comprises a removable reader (17) which is capable of being linked to said second inertial reference unit (9) in such a way as to be able to read the heading measured by the latter and to display it on an integrated display screen (19).

16. The device as claimed in any one of claims 7 to 15,
**characterized in that** at least one of said inertial reference units (8, 9, 20) comprises a gyrolaser which uses the acceleration of the earth to measure the heading.

17. An aircraft,
**characterized in that** it comprises a device (1) configured for implementing the method specified under any one of claims 1 to 6.

18. An aircraft,
**characterized in that** it comprises a device (1) such as that specified under any one of claims 7 to 16.

## Patentansprüche

1. Verfahren zum Messen der Orientierung des vorderen Fahrwerks (3) eines Flugzeugs (A), das mit einem Trägheitsreferenz-System (7), das mindestens eine erste Trägheitsreferenz-Einheit (8) aufweist, versehen ist, **dadurch gekennzeichnet, dass**
a) eine zweite Trägheitsreferenz-Einheit (9) an einem (2) der Räder des vorderen Fahrwerks (3) montiert wird;
b) mit Hilfe der zweiten Trägheitsreferenz-Einheit (9), der Kurs des vorderen Fahrwerks (3), bei fehlendem Lenkeinschlag dieses letzten, gemessen wird;
c) mit Hilfe der ersten Trägheitsreferenz-Einheit (8) des Trägheitsreferenz-Systems (7), der Kurs des Flugzeugs (A) gemessen wird; und
d) der gemessene Kurs des vorderen Fahrwerks (3) mit dem gemessenen Kurs des Flugzeugs (A) verglichen wird, derart, dass daraus die Orientierung des vorderen Fahrwerks (3) relativ zu dem Rumpf (5) des Flugzeugs (A) abgeleitet wird.

2. Verfahren nach Anspruch 1, **dadurch gekennzeichnet, dass** die zweite Trägheitsreferenz-Einheit (9) Teil des Trägheitsreferenz-Systems (7) ist und dass in Schritt a) die zweite Trägheitsreferenz-Einheit (9) von dem Flugzeug (A) entfernt wird, bevor sie an dem Rad (2) montiert wird.

3. Verfahren nach einem der Ansprüche 1 und 2, **dadurch gekennzeichnet, dass** in Schritt a) die zweite Trägheitsreferenz-Einheit (9) an einer Platte (21) montiert wird, die an der Felge (23) des Rades (2) befestigt ist.

4. Verfahren nach Anspruch 3, **dadurch gekennzeichnet, dass** die Platte (21) an Schraubenteilen (25) der Felge befestigt wird, die über kooperierende Muttern (26) überstehen.

5. Verfahren nach einem der vorhergehenden Ansprüche, **dadurch gekennzeichnet, dass** das Trägheitsreferenz-System (7) ferner eine dritte Trägheitsreferenz-Einheit (20) aufweist und dass der Kurs des Flugzeugs (A), mit Hilfe der durch die erste und dritte Trägheitsreferenz-Einheit (8, 20) durchgeführten Messungen, bestimmt wird.

6. Verfahren nach einem der vorhergehenden Ansprüche, um ferner die Orientierung des vorderen Fahrwerks (3) zu regeln, **dadurch gekennzeichnet, dass**, wenn die Differenz zwischen dem gemessenen Kurs des vorderen Fahrwerks (3) und dem gemessenen Kurs des Flugzeugs (A) größer als ein vorbestimmter erster Wert ist, die Orientierung des vorderen Fahrwerks (3) verändert wird, derart, dass eine Differenz erhalten wird, die kleiner als ein vorbestimmter zweiter Wert wird.

7. Vorrichtung zum Messen der Orientierung des vorderen Fahrwerks (3) eines Flugzeugs (A), das mit einem Trägheitsreferenz-System (7), das mindestens eine erste Trägheitsreferenz-Einheit (8) aufweist, versehen ist, **dadurch gekennzeichnet, dass** sie Folgendes aufweist:
- das Trägheitsreferenz-System (7), das dafür geeignet ist, den Kurs des Flugzeugs (A) zu messen;
- eine zweite Trägheitsreferenz-Einheit (9), die, mit Hilfe eines Befestigungssystems (10), an einem Rad (2) des vorderen Fahrwerks (3) montierbar ist und die sodann dafür geeignet ist, den Kurs des vorderen Fahrwerks (3) in einer Position zu messen, die einem Fehlen des Lenkeinschlags entspricht; und
- eine Informationsverarbeitungs-Einheit (11), die Mittel (12, 13) aufweist, welche die Durchführung des Vergleichs zwischen dem gemessenen Kurs des vorderen Fahrwerks (3) und dem gemessenen Kurs des Flugzeugs (A) ermöglicht, derart, dass daraus die Orientierung des vorderen Fahrwerks (3) relativ zu dem Rumpf (6) des Flugzeugs (A) abgeleitet werden kann.

8. Vorrichtung nach Anspruch 7, **dadurch gekennzeichnet, dass** das Befestigungssystem (10) eine Platte (21) aufweist,
- die mit einem ortsfesten Träger (22) versehen ist, der dafür geeignet ist, die zweite Trägheitsreferenz-Einheit (9) aufzunehmen; und
- die an der Felge (23) des Rades (2) montierbar ist.

9. Vorrichtung nach einem der Ansprüche 7 und 8, **dadurch gekennzeichnet, dass** das Befestigungssystem (10) mit einer Schutzabdeckung (29) versehen ist.

10. Vorrichtung nach einem der Ansprüche 7 bis 9, **dadurch gekennzeichnet, dass** das Befestigungssystem (10) mit einem Lüfter (30) versehen ist.

11. Vorrichtung nach einem der Ansprüche 7 bis 10, **dadurch gekennzeichnet, dass** die zweite Trägheitsreferenz-Einheit (9) Teil des Trägheitsreferenz-Systems (7) des Flugzeugs (A) ist und von dem Flugzeug (A) entfernbar ist.

12. Vorrichtung nach einem der Ansprüche 7 bis 11, **dadurch gekennzeichnet, dass** die zweite Trägheitsreferenz-Einheit (9) durch ein elektrisches Versorgungsmittel des Flugzeugs (A) elektrisch versorgt werden kann.

13. Vorrichtung nach einem der Ansprüche 7 bis 12, **dadurch gekennzeichnet, dass** das Trägheitsreferenz-System (7) ferner eine dritte Trägheitsreferenz-Einheit (20) aufweist und dass das Trägheitsreferenz-System (7) den Kurs des Flugzeugs (A), mit Hilfe der durch die erste und dritte Trägheitsreferenz-Einheit (8, 20) durchgeführten Messungen, bestimmt.

14. Vorrichtung nach einem der Ansprüche 7 bis 13, **dadurch gekennzeichnet, dass** die zweite Trägheitsreferenz-Einheit (9) mit der Informationsverarbeitungs-Einheit (11) verbindbar ist, derart, dass sie Informationen an diese letzte, die mindestens einen Bildschirm (16) für die Anzeige von Messungen aufweist, übermitteln kann.

15. Vorrichtung nach einem der Ansprüche 7 bis 14, **dadurch gekennzeichnet, dass** sie, ferner, ein lösbares Lesegerät (17) aufweist, das mit der zweiten Trägheitsreferenz-Einheit (9) verbindbar ist, derart, dass es den durch diese letzte gemessenen Kurs lesen kann und ihn auf einem integrierten Anzeigebildschirm (19) anzeigt.

16. Vorrichtung nach einem der Ansprüche 7 bis 15, **dadurch gekennzeichnet, dass** mindestens eine der Trägheitsreferenz-Einheiten (8, 9, 20) einen Laserkreisel aufweist, der die Erdbeschleunigung verwendet, um den Kurs zu messen.

17. Flugzeug, **dadurch gekennzeichnet, dass** es eine Vorrichtung (1) aufweist, die eingerichtet ist, um das in einem der Ansprüche 1 bis 6 spezifizierte Verfahren durchzuführen.

18. Flugzeug, **dadurch gekennzeichnet, dass** es eine Vorrichtung (1) wie die in einem der Ansprüche 7 bis 16 spezifizierte aufweist.
